(19) Europäisches Patentamt
European Patent Office
Office européen des brevets

(11) EP 4 307 087 A1

(12) **EUROPEAN PATENT APPLICATION**
published in accordance with Art. 153(4) EPC

(43) Date of publication:
**17.01.2024 Bulletin 2024/03**

(21) Application number: **21962274.3**

(22) Date of filing: **29.12.2021**

(51) International Patent Classification (IPC):
***G06F 3/01*** *(2006.01)*

(86) International application number:
**PCT/CN2021/142358**

(87) International publication number:
**WO 2023/070933 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.10.2021 CN 202111247920**

(71) Applicant: **Shenzhen Hitevision Technology Co., Ltd.**
**Shenzhen, Guangdong 518000 (CN)**

(72) Inventors:
- **WANG, Xiang**
  **Shenzhen, Guangdong 518000 (CN)**
- **ZHU, Lisen**
  **Shenzhen, Guangdong 518000 (CN)**
- **SUN, Hongwei**
  **Shenzhen, Guangdong 518000 (CN)**

(74) Representative: **Vossius & Partner Patentanwälte Rechtsanwälte mbB**
**Siebertstrasse 3**
**81675 München (DE)**

# (54) GESTURE RECOGNITION METHOD AND APPARATUS, DEVICE, AND MEDIUM

(57) The present application discloses a gesture recognition method and apparatus, a device and a medium, which relates to the technical field of artificial intelligence. The gesture recognition method includes: taking a first image in the image sequence as a target image; determining at least two lines corresponding to fingers in the target image; determining valid lines from the at least two lines; under a condition that a first number of the valid lines is greater than a first number threshold and first angles each between a corresponding one of all of the valid lines and a first coordinate axis of the target image are less than a first angle threshold, determining a subsequent image of the target image as the target image, and returning to the step of determining at least two lines corresponding to the fingers in the target image until the first number is not greater than the first number threshold or one or more of the first angles are not less than the first angle threshold; recognizing, according to coordinate values of key points on the valid lines in the first image and a previous image of the target image, a gesture corresponding to changing from the first image to the previous image of the target image. With the solution of the present application, gesture recognition efficiency can be improved.

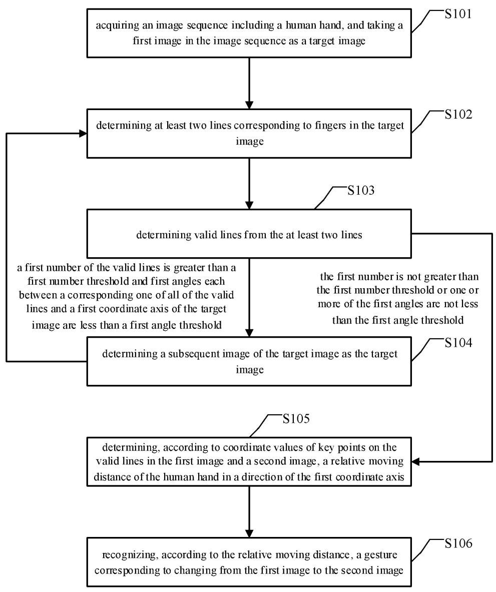


Fig. 1

EP 4 307 087 A1

## Description

### CROSS-REFERENCE TO RELATED APPLICATIONS

The present application claims priority to Chinese Patent Application No. 202111247920.X, filed on October 26, 2021, which is incorporated herein by reference in its entirety.

### TECHNICAL FIELD

The present application relates to a technical field of artificial intelligence, and in particular, to a gesture recognition method and apparatus, a device, and a medium.

### BACKGROUND

With the development of artificial intelligence interaction technology, gesture control technology is more and more used in various fields, such as vehicle systems, smart homes, Virtual Reality (VR) interactions, smart phones, and the like. Here, gesture recognition is the basis of gesture control.

In the related art, gestures are mainly recognized through a special gesture recognition model. However, gesture recognition through a gesture recognition model is computationally intensive and inefficient.

### SUMMARY

The embodiments of the present application provide a gesture recognition method and apparatus, a device, and a medium, which can solve the problem of inefficient gesture recognition.

In a first aspect, the embodiments of the present application provide a gesture recognition method, including:

acquiring an image sequence including a human hand, and taking a first image in the image sequence as a target image;
determining at least two lines corresponding to fingers in the target image;
determining valid lines from the at least two lines;
under a condition that the first number of the valid lines is greater than a first number threshold and first angles each between a corresponding one of all of the valid lines and a first coordinate axis of the target image are less than a first angle threshold, determining a subsequent image of the target image as the target image, and returning to the step of determining at least two lines corresponding to the fingers in the target image until the first number is not greater than the first number threshold or one or more of the first angles are not less than the first angle threshold;
determining, according to coordinate values of key points on the valid lines in the first image and a second image, a relative moving distance of the human hand in a direction of the first coordinate axis, wherein the second image is a previous image of the target image;
recognizing, according to the relative moving distance, a gesture corresponding to changing from the first image to the second image.

In a second aspect, the embodiments of the present application provide a gesture recognition apparatus, including:

an acquisition module configured to acquire an image sequence including a human hand, and take a first image in the image sequence as a target image;
a first determination module configured to determine at least two lines corresponding to fingers in the target image;
a second determination module configured to determine valid lines from the at least two lines;
a third determination module configured to determine, under a condition that the first number of the valid lines is greater than a first number threshold and first angles each between a corresponding one of all of the valid lines and a first coordinate axis of the target image are less than a first angle threshold, a subsequent image of the target image as the target image, and trigger the first determination module until the first number is not greater than the first number threshold or one or more of the first angles are not less than the first angle threshold;
a fourth determination module configured to determine, according to coordinate values of key points on the valid lines in the first image and a second image, a relative moving distance of the human hand in a direction of the first coordinate axis, wherein the second image is a previous image of the target image;
a recognition module configured to recognize, according to the relative moving distance, a gesture corresponding to changing from the first image to the second image.

In a third aspect, the embodiments of the present application provide an electronic device including: a processor; a memory; and programs or instructions stored on the memory and executable by the processor, wherein the programs or instructions, when executed by the processor, implement steps of the method according to the first aspect.

In a fourth aspect, the embodiments of the present application provide a readable storage medium having programs or instructions stored thereon, wherein the programs or instructions, when executed by a processor, implement steps of the method according to the first aspect.

In a fifth aspect, the embodiments of the present application provide a chip including a processor and a communication interface coupled to the processor, wherein the processor executes programs or instructions to implement steps of the method according to the first aspect.

In the embodiments of the present application, with regard to the image sequence including the human hand, the first image in the image sequence is determined as the target image; at least two lines corresponding to the fingers in the target image are determined; the valid lines from the at least two lines are determined; under a condition that the first number of the valid lines is greater than the first number threshold and the first angles each between a corresponding one of all of the valid lines and the first coordinate axis of the target image are less than the first angle threshold, the subsequent image of the target image is determined as the target image, and the method is returned to the step of determining at least two lines corresponding to the fingers in the target image until the first number is not greater than the first number threshold or one or more of the first angles are not less than the first angle threshold; according to the coordinate values of the key points on the valid lines in the first image and the previous image of the target image, the gesture corresponding to changing from the first image to the previous image of the target image is recognized. Since the operation amount of recognizing the gesture according to the coordinate values of the key points on the valid lines in the first image and the previous image of the target image is smaller than the operation amount of recognizing the gesture by the gesture recognition model, the gesture recognition efficiency can be improved.

## BRIEF DESCRIPTION OF THE DRAWINGS

Fig. 1 is a flow schematic diagram of a gesture recognition method provided by an embodiment of the present application;
Fig. 2 is a schematic diagram of key points of a human hand provided by an embodiment of the present application;
Fig. 3 is a schematic structural diagram of a gesture recognition apparatus provided by an embodiment of the present application;
Fig. 4 is a schematic structural diagram of an electronic device provided by an embodiment of the present application;
Fig. 5 is a schematic hardware structural diagram of an electronic device implementing embodiments of the present application.

## DETAILED DESCRIPTION

The technical solutions in the embodiments of the present application will be clearly described below in combination with the drawings in the embodiments of the present application, and obviously, the described embodiments are part of the embodiments of the present application rather than all embodiments. Based on the embodiments in the present application, all other embodiments obtained by those ordinary skilled in the art fall within the protection scope of the present application.

The terms "first", "second" and the like in the specification and the claim of the present application are used to distinguish similar objects and not to describe a particular order or sequence. It should be understood that the data described in this way can be interchangeable where appropriate, so that the embodiments of the present application can be implemented in an order other than those illustrated or described here. Also, the objects distinguished by the terms "first", "second" and the like are usually belong to one class, and the number of the objects is not limited, for example, the first object may include one or more objects. Furthermore, in the specification and the claim, the statement "and/or" indicates at least one of the connected objects, and the character "f" generally indicates that the associated objects are in an "or" relationship.

The gesture recognition method and apparatus, the device and the medium provided by the embodiments of the present application will be described in detail below through specific embodiments and application scenarios thereof with reference to the accompanying drawings.

Fig. 1 is a flow schematic diagram of a gesture recognition method provided by an embodiment of the present application. As shown in Fig. 1, the gesture recognition method may include:

S101: acquiring an image sequence including a human hand, and taking a first image in the image sequence as a target image;

S102: determining at least two lines corresponding to fingers in the target image;

S103: determining valid lines from the at least two lines; under a condition that the first number of the valid lines is greater than a first number threshold and first angles each between a corresponding one of all of the valid lines and a first coordinate axis of the target image are less than a first angle threshold, executing S104, and under a condition that the first number is not greater than the first number threshold or one or more of the first angles are not less than the first angle threshold, executing S105;

S104: determining a subsequent image of the target image as the target image, and continuing to execute S102;

S105: determining, according to coordinate values of key points on the valid lines in the first image and a second image, a relative moving distance of the human hand in a direction of the first coordinate axis, wherein the second image is a previous image of the target image;

S106: recognizing, according to the relative moving distance, a gesture corresponding to changing from the first image to the second image.

In some possible implementations of the embodiments of the present application, the subsequent image of the target image refers to an image that is located after and is adjacent to the target image; the previous image of the target image refers to an image that is located before and is adjacent to the target image.

The specific implementations of the above steps will be described in detail below.

In the embodiments of the present application, with regard to the image sequence including the human hand, the first image in the image sequence is determined as the target image; at least two lines corresponding to the fingers in the target image are determined; the valid lines from the at least two lines are determined; under a condition that the first number of the valid lines is greater than the first number threshold and the first angles each between a corresponding one of all of the valid lines and the first coordinate axis of the target image are less than the first angle threshold, the subsequent image of the target image is determined as the target image, and the method is returned to the step of determining at least two lines corresponding to the fingers in the target image until the first number is not greater than the first number threshold or one or more of the first angles are not less than the first angle threshold; according to the coordinate values of the key points on the valid lines in the first image and the previous image of the target image, the gesture corresponding to changing from the first image to the previous image of the target image is recognized. Since the operation amount of recognizing the gesture according to the coordinate values of the key points on the valid lines in the first image and the previous image of the target image is smaller than the operation amount of recognizing the gesture by the gesture recognition model, the gesture recognition efficiency can be improved.

In some possible implementations of the embodiments of the present application, in S101, the human hand can be tracked by a camera, and image acquisition may be performed for the human hand, thereby obtaining the image sequence including the human hand.

In some possible implementations of the embodiments of the present application, in S101, the first image may be a first image with the existence of the human hand. Specifically, the human hand detection can be performed on the images in the image sequence successively, and the detected first image with the existence of the human hand can be taken as the target image.

The embodiments of the present application does not define the method used in the human hand detection, and any available method can be applied to the embodiments of the present application.

In some possible implementations of the embodiments of the present application, in S102, the target image may be input into a human hand key point identification model to obtain the key points of the human hand in the target image. Here, the human hand includes 21 key points, wherein the 21 key points include a wrist key point, key points corresponding to fingertips of fingers, and key points corresponding to joints of fingers. As shown in Fig. 2, Fig. 2 is a schematic diagram of key points of a human hand provided by an embodiment of the present application.

A line composed of key points 1-4 is taken as a thumb line 10, a line composed of key points 5-8 is taken as an index finger line 11, a line composed of key points 9-12 is taken as a middle finger line 12, a line composed of key points 13-16 is taken as a ring finger line 13, and a line composed of key points 17-20 is taken as a little finger line 14. Key point 0 is the wrist key point.

In some possible implementations of the embodiments of the present application, S103 may include: calculating, for each first target line of the at least two lines, second angles each between the first target line and another line of the at least two lines other than the first target line; determining, under a condition that all of the second angles are greater than a second angle threshold, the first target line as an invalid line; determining lines from the at least two lines other than the invalid line as the valid lines.

Illustratively, taking the little finger line 14 in the image P1 as an example, the angles each between the little finger line 14 and the thumb line 10, the index finger line 11, the middle finger line 12, and the ring finger line 13 are calculated.

It is assumed that the angles each between the little finger line 14 and the thumb line 10, the index finger line 11, the middle finger line 12, and the ring finger line 13 are greater than the second angle threshold, the little finger line 14 is determined as the invalid line.

Similarly, it can be determined whether the thumb line 10, the index finger line 11, the middle finger line 12, and the ring finger line 13 are invalid lines. When the invalid lines are determined, lines other than the invalid lines among the thumb line 10, the index finger line 11, the middle finger line l2, the ring finger line 13, and the little finger line 14 may be determined as the valid lines.

The embodiments of the present application do not define the method used for determining the first angle between the line and the first coordinate axis of the target image, and any available method can be applied to the embodiments of the present application. For example, with regard to the index finger line 11, a vector of the key point 5 and the key point 8 in the index finger line 11 is calculated, and then a cosine value of an angle between the vector and the first coordinate axis is calculated. Further, the angle between the vector and the first coordinate axis is determined according to the cosine value, and this angle is used as the angle between the index finger line 11 and the first coordinate axis.

In some possible implementations of the embodiments of the present application, S105 may include: calculating first differences between coordinate components on the first coordinate axis of the coordinate values of the key points on the valid lines in the first image and the second image and a coordinate component of a target key point on the first coordinate axis, wherein the target key point is a wrist key point; calculating second differences between coordinate components on a second coordinate axis of the coordinate values of the key points on the valid lines in the second image and a coordinate component of the target key point on the second coordinate axis; determining the relative moving distance according to the first differences and the second differences.

Illustratively, taking the first image P1 and the second image P2 as an example, wherein the first coordinate axis is the X axis of the image, and the second coordinate axis is the Y axis of the image. The X axis is a transverse axis, and the Y axis is a longitudinal axis.

It is assumed that the thumb line 10, the index finger line 11, the middle finger line 12, the ring finger line 13, and the little finger line 14 are all valid lines.

With regard to the first image P1, the first differences between the X axis components of the four key points 1-4 on the thumb line 10 and the X axis component of the wrist key point 0 are calculated respectively, and the first differences between the X axis components of the key points 1-4 and the X axis component of the wrist key point 0 are $dx_{1\text{-}0}$, $dx_{2\text{-}0}$, $dx_{3\text{-}0}$ and $dx_{4\text{-}0}$, respectively.

Similarly, the first differences between the X axis components of the key points on the index finger line 11, the middle finger line 12, the ring finger line 13, and the little finger line 14 in the first image P1 and the X axis component of the wrist key point 0 can also be calculated, and the first differences between the X axis components of the key points on the thumb line 10, the index finger line 11, the middle finger line 12, the ring finger line l3, and the little finger line 14 in the second image P2 and the X axis component of the wrist key point 0 can also be calculated.

Similarly, the second differences between the Y axis components of the key points on the thumb line 10, the index finger line 11, the middle finger line 12, the ring finger line 13 and the little finger line 14 in the second image P2 and the Y axis component of the wrist key point 0 can also be calculated.

In some possible implementations of the embodiments of the present application, determining the relative moving distance according to the first differences and the second differences may include: calculating, for each first valid line in the first image and the second image, a first average value of the first differences corresponding to the first valid line; calculating, for each second valid line in the second image, a second average value of the second differences corresponding to the second valid line; determining the relative moving distance according to the first average value and the second average value.

Illustratively, taking the first image P1 and the second image P2 as an example, wherein the first coordinate axis is the X axis of the image, and the second coordinate axis is the Y axis of the image. The X axis is a transverse axis, and the Y axis is a longitudinal axis.

It is assumed that the thumb line 10, the index finger line 11, the middle finger line 12, the ring finger line 13, and the little finger line l4 are all valid lines.

With regard to the first image P1, the first differences between the X axis components of the four key points 1-4 on the thumb line 10 and the X axis component of the wrist key point 0 are calculated respectively, and the first differences between the X axis components of the key points 1-4 and the X axis component of the wrist key point 0 are $dx_{1\text{-}0}$, $dx_{2\text{-}0}$, $dx_{3\text{-}0}$ and $dx_{4\text{-}0}$, respectively.

Then, the first average value of the first differences corresponding to the thumb line 10 in the first image P1 on the X-axis may be: $DX_{P1\text{-}10}=(dx_{1\text{-}0}+dx_{2\text{-}0}+dx_{3\text{-}0}+dx_{4\text{-}0})/4$.

Similarly, the first average values of the first differences corresponding to the index finger line 11, the middle finger line 12, the ring finger line 13, and the little finger line 14 in the first image P1 on the X-axis, and the first average values of the first differences corresponding to the thumb line 10, the index finger line 11, the middle finger line 12, the ring finger line 13, and the little finger line 14 in the second image P2 on the X-axis can be calculated (i.e., $DX_{P1\text{-}l1}$,

$DX_{P1-l2}$, $DX_{P1-l3}$, $DX_{P1-l4}$, $DX_{P2-l0}$, $DX_{P2-l1}$, $DX_{P2-l2}$, $DX_{P2-l3}$ and $DX_{P2-l4}$, respectively).

Similarly, the second average values of the second differences corresponding to the thumb line 10, the index finger line 11, the middle finger line 12, the ring finger line 13, and the little finger line 14 in the second image P2 on the Y-axis can also be calculated (i.e., $DY_{P2-l0}$, $DY_{P2-11}$, $DY_{P2-12}$, $DY_{P2-13}$ and $DY_{P2-l4}$, respectively).

According to the first average values corresponding to the thumb line 10, the index finger line 11, the middle finger line 12, the ring finger line 13, and the little finger line 14 in the first image P1 on the X-axis, and the first average values corresponding to the thumb line l0, the index finger line 11, the middle finger line 12, the ring finger line 13, and the little finger line 14 in the second image P2 on the X-axis (i.e., $DX_{P1-l0}$, $DX_{P1-l1}$, $DX_{P1-l2}$, $DX_{P1-l3}$, $DX_{P1-l4}$, $DX_{P2-l0}$, $DX_{P2-l1}$, $DX_{P2-l2}$, $DX_{P2-l3}$ and $DX_{P2-l4}$, respectively), as well as the second average values corresponding to the thumb line 10, the index finger line 11, the middle finger line 12, the ring finger line 13, and the little finger line 14 in the second image P2 on the Y-axis (i.e., $DY_{P2-l0}$, $DY_{P2-11}$, $DY_{P2-l2}$, $DY_{P2-13}$ and $DY_{P2-l4}$, respectively), the relative moving distance may be determined.

In some possible implementations of the embodiments of the present application, determining the relative moving distance according to the first average value and the second average value may include: calculating a third average value of third differences between first average values corresponding to the second image and first average values corresponding to the first image; calculating a fourth average value of absolute values of fourth differences of second average values of every two adjacent valid lines in the second image; determining the relative moving distance according to the third average value and the fourth average value.

Illustratively, taking the first image P1 and the second image P2 as an example, wherein the first coordinate axis is the X axis of the image, and the second coordinate axis is the Y axis of the image.

The third average value DX of the third differences between the first average values corresponding to the thumb line 10, the index finger line 11, the middle finger line 12, the ring finger line 13, and the little finger line 14 in the second image P2 on the X-axis (i.e., $DX_{P2-l0}$, $DX_{P2-l1}$, $DX_{P2-l2}$, $DX_{P2-l3}$ and $DX_{P2-l4}$, respectively) and the first average values corresponding to the thumb line 10, the index finger line 11, the middle finger line 12, the ring finger line 13, and the little finger line 14 in the first image P1 on the X-axis (i.e., $DX_{P1-l0}$, $DX_{P1-l1}$, $DX_{P1-l2}$, $DX_{P1-l3}$, and $DX_{P1-l4}$, respectively) may be calculated.

Then, $$DX=((DX_{P2-l0}-DX_{P1-l0})+(DX_{P2-l1}-DX_{P1-l1})+(DX_{P2-l2}-DX_{P1-l2})+(DX_{P2-l3}-DX_{P1-l3})+(DX_{P2-l4}-DX_{P1-l4}))/5.$$

The fourth average value YP2 of the absolute values of the fourth differences of the second average values of every two adjacent valid lines in the second image P2 may be calculated. It will be appreciated that the thumb is adjacent to the index finger, the index finger is adjacent to the middle finger, the middle finger is adjacent to the ring finger, and the ring finger is adjacent to the little finger. The difference between the second average values corresponding to the thumb line and the index finger line may be: $DY_{P2-l0}- DY_{P2-11}$; the difference between the second average values corresponding to the index finger line and the middle finger line may be: $DY_{P2-l1}- DY_{P2-l2}$; the difference between the second average values corresponding to the middle finger line and the ring finger line may be: $DY_{P2-l2}- DY_{P2-l3}$; the difference between the second average values corresponding to the ring finger line and the little finger line may be: $DY_{P2-l3}- DY_{P2-l4}$.

Then, the fourth average value YP2 = $(abs(DY_{P2-l0}- DY_{P2-l1})+abs(DY_{P2-l1}- DY_{P2-l2})+abs(DY_{P2-l2}- DY_{P2-l3})+abs(DY_{P2-l3}- DY_{P2-l4}))/4$. Here, abs() is an absolute value finding function used to calculate the absolute value of the value within the bracket.

The relative moving distance may be determined based on the third average value DX and the fourth average value YP2.

In some possible implementations of the embodiments of the present application, determining the relative moving distance according to the third average value and the fourth average value includes: determining a quotient of the third average value and the fourth average value as the relative moving distance.

Illustratively, taking the first image P1 and the second image P2 as an example, wherein the first coordinate axis is the X axis of the image, and the second coordinate axis is the Y axis of the image.

Then,

$$LX=DX/YP2.$$

The process of determining the gesture corresponding to the two images when the first coordinate axis is the Y axis and the second coordinate axis is the X axis may be similar to the process of determining the gesture corresponding to the two images when the first coordinate axis is the X axis and the second coordinate axis is the Y axis. For further details, reference can be made to the above-mentioned process of determining the gesture corresponding to the two images when the first coordinate axis is the X axis and the second coordinate axis is the Y axis. The embodiments of the present application will not be described in detail with respect to this.

In some possible implementations of the embodiments of the present application, the first coordinate axis is an X axis of the image, and the second coordinate axis is a Y axis of the image. Recognizing, according to the relative moving distance, the gesture corresponding to changing from the first image to the second image may include: under a condition that an absolute value of the relative moving distance is greater than a preset distance threshold and the relative moving distance is greater than 0, recognizing the gesture as a right-dial gesture; under a condition that the absolute value of the relative moving distance is greater than the preset distance threshold and the relative moving distance is less than 0, recognizing the gesture as a left-dial gesture.

In some possible implementations of the embodiments of the present application, the first coordinate axis is a Y axis of the image, and the second coordinate axis is an X axis of the image. Recognizing, according to the relative moving distance, the gesture corresponding to changing from the first image to the second image may include: under a condition that an absolute value of the relative moving distance is greater than a preset distance threshold and the relative moving distance is greater than 0, recognizing the gesture as a down-dial gesture; under a condition that the absolute value of the relative moving distance is greater than the preset distance threshold and the relative moving distance is less than 0, recognizing the gesture as an up-dial gesture.

In some possible implementations of the embodiments of the present application, the number of the valid lines in the two images may be determined to be different. For example, the valid lines in the image P1 may be determined to be the index finger line 11, the middle finger line l2, the ring finger line l3 and the little finger line l4, and the valid lines in the image P2 may be determined to be the middle finger line l2, the ring finger line 13 and the little finger line l4, then the index finger line l1 in the image P1 can be ignored, and the relative moving distance of the human hand in the direction of the first coordinate axis can be determined only according to the middle finger lines l2, the ring finger lines l3 and the little finger lines l4 in the images P1 and P2.

Here, the process of determining the relative moving distance of the human hand in the direction of the first coordinate axis according to the middle finger line l2, the ring finger line l3 and the little finger line l4 is similar to the process of determining the relative moving distance of the human hand in the direction of the first coordinate axis according to the thumb line l0, the index finger line 11, the middle finger line l2, the ring finger line l3 and the little finger line l4 in the above-mentioned embodiments. Specifically, reference can be made to the process of determining the relative moving distance of the human hand in the direction of the first coordinate axis according to the thumb line l0, the index finger line l1, the middle finger line l2, the ring finger line l3 and the little finger line l4. The embodiments of the present application will not be described in detail with respect to this.

It should be noted that for the gesture recognition method provided in the embodiments of the present application, the executing subject may be a gesture recognition apparatus, or a control module in the gesture recognition apparatus for executing the gesture recognition method. In the embodiments of the present application, the gesture recognition apparatus provided by the embodiment of the present application is illustrated by performing the gesture recognition method.

Fig. 3 is a schematic structural diagram of a gesture recognition apparatus provided by an embodiment of the present application. The gesture recognition apparatus 300 may include:

an acquisition module 301 configured to acquire an image sequence including a human hand, and take a first image in the image sequence as a target image;
a first determination module 302 configured to determine at least two lines corresponding to fingers in the target image;
a second determination module 303 configured to determine valid lines from the at least two lines;
a third determination module 304 configured to determine, under a condition that the first number of the valid lines is greater than a first number threshold and first angles each between a corresponding one of all of the valid lines and a first coordinate axis of the target image are less than a first angle threshold, a subsequent image of the target image as the target image, and trigger the first determination module 302 until the first number is not greater than the first number threshold or one or more of the first angles are not less than the first angle threshold;
a fourth determination module 305 configured to determine, according to coordinate values of key points on the valid lines in the first image and a second image, a relative moving distance of the human hand in a direction of the first coordinate axis, wherein the second image is a previous image of the target image;
a recognition module 306 configured to recognize, according to the relative moving distance, a gesture corresponding to changing from the first image to the second image.

In the embodiments of the present application, with regard to the image sequence including the human hand, the first image in the image sequence is determined as the target image; at least two lines corresponding to the fingers in the target image are determined; the valid lines from the at least two lines are determined; under a condition that the first number of the valid lines is greater than the first number threshold and the first angles each between a corresponding one of all of the valid lines and the first coordinate axis of the target image are less than the first angle threshold, the subsequent image of the target image is determined as the target image, and the method is returned to the step of determining at least two lines corresponding to the fingers in the target image until the first number is not greater than the first number threshold or one or more of the first angles are not less than the first angle threshold; according to the coordinate values of the key points on the valid lines in the first image and the previous image of the target image, the gesture corresponding to changing from the first image to the previous image of the target image is recognized. Since the operation amount of recognizing the gesture according to the coordinate values of the key points on the valid lines in the first image and the previous image of the target image is smaller than the operation amount of recognizing the gesture by the gesture recognition model, the gesture recognition efficiency can be improved.

In some possible implementations of the embodiments of the present application, the second determination module 303 includes:

a first calculation sub-module configured to calculate, for each first target line of the at least two lines, second angles each between the first target line and another line of the at least two lines other than the first target line;
a first determination sub-module configured to determine, under a condition that all of the second angles are greater than a second angle threshold, the first target line as an invalid line;
a second determination sub-module configured to determine lines from the at least two lines other than the invalid line as the valid lines.
In some possible implementations of the embodiments of the present application, the fourth determination module 305 includes:
a second calculation sub-module configured to calculate first differences between coordinate components on the first coordinate axis of the coordinate values of the key points on the valid lines in the first image and the second image and a coordinate component of a target key point on the first coordinate axis, wherein the target key point is a wrist key point;
a third calculation sub-module configured to calculate second differences between coordinate components on a second coordinate axis of the coordinate values of the key points on the valid lines in the second image and a coordinate component of the target key point on the second coordinate axis;
a third determination sub-module configured to determine the relative moving distance according to the first differences and the second differences.

In some possible implementations of the embodiments of the present application, the third determination sub-module includes:

a first calculation unit configured to calculate, for each first valid line in the first image and the second image, a first average value of the first differences corresponding to the first valid line;
a second calculation unit configured to calculate, for each second valid line in the second image, a second average value of the second differences corresponding to the second valid line;
a determination unit configured to determine the relative moving distance according to the first average value and the second average value.

In some possible implementations of the embodiments of the present application, the determination unit includes:

a first calculation sub-unit configured to calculate a third average value of third differences between first average values corresponding to the second image and first average values corresponding to the first image;
a second calculation sub-unit configured to calculate a fourth average value of absolute values of fourth differences of second average values of every two adjacent valid lines in the second image;
a determination sub-unit configured to determine the relative moving distance according to the third average value and the fourth average value.

In some possible implementations of the embodiments of the present application, the determination sub-unit is specifically configured to:
determine a quotient of the third average value and the fourth average value as the relative moving distance.

In some possible implementations of the embodiments of the present application, the first coordinate axis is an X axis of the image, and the second coordinate axis is a Y axis of the image;

the recognition module 306 is specifically configured to:

under a condition that an absolute value of the relative moving distance is greater than a preset distance threshold and the relative moving distance is greater than 0, recognize the gesture as a right-dial gesture;
under a condition that the absolute value of the relative moving distance is greater than the preset distance threshold and the relative moving distance is less than 0, recognize the gesture as a left-dial gesture.

In some possible implementations of the embodiments of the present application, the first coordinate axis is a Y axis of the image, and the second coordinate axis is an X axis of the image;

the recognition module 306 is specifically configured to:
under a condition that an absolute value of the relative moving distance is greater than a preset distance threshold and the relative moving distance is greater than 0, recognize the gesture as a down-dial gesture;
under a condition that the absolute value of the relative moving distance is greater than the preset distance threshold and the relative moving distance is less than 0, recognize the gesture as an up-dial gesture.

The gesture recognition apparatus in the embodiments of the present application may be an apparatus, or may be a component, an integrated circuit, or a chip in a terminal. The apparatus may be a mobile electronic device or a non-mobile electronic device. By way of example, the mobile electronic device may be a mobile phone, a tablet computer, a notebook computer, a palmtop computer, a vehicle-mounted electronic device, a wearable device, a ultra-mobile personal computer (UMPC), a netbook or a personal digital assistant (PDA), and the like; the non-mobile electronic device may be a server, a Network Attached Storage (NAS), a personal computer (PC), a television (TV), a teller machine or a self-help machine, and the like; and the embodiments of the present application are not particularly limited.

The gesture recognition apparatus in the embodiments of the present application may be an apparatus having an operating system. The operating system may be an Android operating system, may be an iOS operating system, and may also be other possible operating systems, and the embodiments of the present application are not particularly limited.

The gesture recognition apparatus provided by the embodiments of the present application can implement various processes in the gesture recognition method embodiments of Figs. 1 and 2, and in order to avoid repetition, the description thereof will not be repeated here.

Optionally, as shown in Fig. 4, the embodiments of the present application also provide an electronic device 400, including: a processor 401; a memory 402; and programs or instructions stored on the memory 402 and executable by the processor 401, wherein the programs or instructions, when executed by the processor 401, implement the various processes of the above gesture recognition method embodiments, and can achieve the same technical effect. In order to avoid repetition, the description thereof will not be repeated here.

It should be noted that the electronic device in the embodiments of the present application includes the mobile electronic devices and the non-mobile electronic devices as described above.

In some possible implementations of the embodiments of the present application, the processor 401 may include a central processing unit (CPU), or an Application Specific Integrated Circuit (ASIC), or may be configured as one or more integrated circuits implementing the embodiments of the present application.

In some possible implementations of the embodiments of the present application, the memory 402 may include a Read-Only Memory (ROM), a random Access Memory (RAM), a magnetic disk storage media device, an optical storage media device, a flash memory device, and an electrical, optical, or other physical/tangible memory storage device. Thus, in general, the memory includes one or more tangible (non-transitory) computer-readable storage media (e.g. memory devices) encoded with software including computer-executable instructions, and the software, when executed (e.g. by one or more processors), is operable to perform the operations described with reference to the gesture recognition method according to the embodiments of the present application.

Fig. 5 is a schematic hardware structural diagram of an electronic device implementing embodiments of the present application.

The electronic device 500 includes, but is not limited to: a radio frequency unit 501, a network module 502, an audio output unit 503, an input unit 504, a sensor 505, a display unit 506, a user input unit 507, an interface unit 508, a memory 509, and a processor 510.

As will be appreciated by those skilled in the art, the electronic device 500 may also include a power source (e.g. a battery) for powering the various components. The power source may be logically connected to the processor 510 through a power management system, which may implement functions of managing charge, discharge, and power consumption. The structure of the electronic device shown in Fig. 5 is not to be construed as limiting the electronic device, and the electronic device may include more or fewer components than shown, or some components may be combined, or the components may be in a different arrangement, which will not be described in detail herein.

Here, the processor 510 is configured to: take a first image in an acquired image sequence as a target image; determine at least two lines corresponding to fingers in the target image; determine valid lines from the at least two lines;

under a condition that the first number of the valid lines is greater than a first number threshold and first angles each between a corresponding one of all of the valid lines and a first coordinate axis of the target image are less than a first angle threshold, determine a subsequent image of the target image as the target image, and under a condition that the first number is not greater than the first number threshold or one or more of the first angles are not less than the first angle threshold, determine, according to coordinate values of key points on the valid lines in the first image and a second image, a relative moving distance of the human hand in a direction of the first coordinate axis, wherein the second image is a previous image of the target image; recognize, according to the relative moving distance, a gesture corresponding to changing from the first image to the second image.

In the embodiments of the present application, with regard to the image sequence including the human hand, the first image in the image sequence is determined as the target image; at least two lines corresponding to the fingers in the target image are determined; the valid lines from the at least two lines are determined; under a condition that the first number of the valid lines is greater than the first number threshold and the first angles each between a corresponding one of all of the valid lines and the first coordinate axis of the target image are less than the first angle threshold, the subsequent image of the target image is determined as the target image, and the method is returned to the step of determining at least two lines corresponding to the fingers in the target image until the first number is not greater than the first number threshold or one or more of the first angles are not less than the first angle threshold; according to the coordinate values of the key points on the valid lines in the first image and the previous image of the target image, the gesture corresponding to changing from the first image to the previous image of the target image is recognized. Since the operation amount of recognizing the gesture according to the coordinate values of the key points on the valid lines in the first image and the previous image of the target image is smaller than the operation amount of recognizing the gesture by the gesture recognition model, the gesture recognition efficiency can be improved.

In some possible implementations of the embodiments of the present application, the processor 510 is specifically configured to:

calculate, for each first target line of the at least two lines, second angles each between the first target line and another line of the at least two lines other than the first target line;
determine, under a condition that all of the second angles are greater than a second angle threshold, the first target line as an invalid line;
determine lines from the at least two lines other than the invalid line as the valid lines.

In some possible implementations of the embodiments of the present application, the processor 510 is specifically configured to:

calculate first differences between coordinate components on the first coordinate axis of the coordinate values of the key points on the valid lines in the first image and the second image and a coordinate component of a target key point on the first coordinate axis, wherein the target key point is a wrist key point;
calculate second differences between coordinate components on a second coordinate axis of the coordinate values of the key points on the valid lines in the second image and a coordinate component of the target key point on the second coordinate axis;
determine the relative moving distance according to the first differences and the second differences.

In some possible implementations of the embodiments of the present application, the processor 510 is specifically configured to:

calculate, for each first valid line in the first image and the second image, a first average value of the first differences corresponding to the first valid line;
calculate, for each second valid line in the second image, a second average value of the second differences corresponding to the second valid line;
determine the relative moving distance according to the first average value and the second average value.

In some possible implementations of the embodiments of the present application, the processor 510 is specifically configured to:

calculate a third average value of third differences between first average values corresponding to the second image and first average values corresponding to the first image;
calculate a fourth average value of absolute values of fourth differences of second average values of every two adjacent valid lines in the second image;
determine the relative moving distance according to the third average value and the fourth average value.

In some possible implementations of the embodiments of the present application, the processor 510 is specifically configured to:

determine a quotient of the third average value and the fourth average value as the relative moving distance.

In some possible implementations of the embodiments of the present application, the first coordinate axis is an X axis of the image, and the second coordinate axis is a Y axis of the image; the processor 510 is specifically configured to:

under a condition that an absolute value of the relative moving distance is greater than a preset distance threshold and the relative moving distance is greater than 0, recognize the gesture as a right-dial gesture;

under a condition that the absolute value of the relative moving distance is greater than the preset distance threshold and the relative moving distance is less than 0, recognize the gesture as a left-dial gesture.

In some possible implementations of the embodiments of the present application, the first coordinate axis is a Y axis of the image, and the second coordinate axis is an X axis of the image; the processor 510 is specifically configured to:

under a condition that an absolute value of the relative moving distance is greater than a preset distance threshold and the relative moving distance is greater than 0, recognize the gesture as a down-dial gesture;

under a condition that the absolute value of the relative moving distance is greater than the preset distance threshold and the relative moving distance is less than 0, recognize the gesture as an up-dial gesture.

It should be appreciated that in embodiments of the present application, the input unit 504 may include a Graphics Processing Unit (GPU) 5041 and a microphone 5042, and the Graphics Processing Unit 5041 may process image data for still pictures or videos obtained by an image capture device, such as a camera, in either a video capture mode or an image capture mode. The display unit 506 may include a display panel 5061, and the display panel 5061 may be configured in the form of a liquid crystal display, an organic light emitting diode, and the like. The user input unit 507 includes a touch panel 5071 and other input devices 5072. The touch panel 5071 is also known as a touch screen. The touch panel 5071 may include two parts, a touch detection device and a touch controller. Other input devices 5072 may include, but are not limited to, a physical keyboard, function keys (e.g. volume control keys, switch keys, etc.), a trackball, a mouse, and a joystick, which will not be described in detail herein. The memory 509 may be used to store software programs and various data including, but not limited to, applications and operating systems. The processor 510 may integrate an application processor, which primarily handles operating systems, user interfaces, applications, and the like, and a modem processor, which primarily handles wireless communications. It will be appreciated that the modem processor described above may also not be integrated into the processor 510.

The embodiments of the present application also provide a readable storage medium having programs or instructions stored thereon, wherein the programs or instructions, when executed by a processor, implement the various processes of the above gesture recognition method embodiments. Further, the same technical effect can be achieved, and in order to avoid repetition, the description thereof will not be repeated.

Here, the processor is a processor in the electronic device described in the above embodiment. The readable storage medium includes a computer-readable storage medium, and examples of the computer-readable storage medium include a non-transitory computer-readable storage medium, such as ROM, RAM, magnetic or optical disks, and the like.

The embodiments of the present application also provide a chip including a processor and a communication interface coupled to the processor, wherein the processor executes programs or instructions to implement various processes of the above gesture recognition method embodiments. Further, the same technical effect can be achieved, and in order to avoid repetition, the description thereof will not be repeated.

It should be understood that the chip mentioned in embodiments of the present application may also be referred to as a system-level chip, a system chip, a chip system, or a system-on-chip, and the like.

It should be noted that, in this document, the terms "comprising", "including" or any other variation thereof are intended to encompass a non-exclusive inclusion such that a process, method, article or device that includes a list of elements includes not only those elements, but also includes other elements that are not explicitly listed but inherent to such a process, method, article or device. Without further limitation, an element defined by the term "comprising..." does not preclude presence of additional elements in a process, method, article or device that includes the element. Furthermore, it should be noted that the scope of the methods and apparatus in the embodiments of the present application is not limited to the order of performing the functions shown or discussed, and may include performing the functions in a substantially simultaneous manner or in a reverse order depending on the functionality involved. For example, the methods described may be performed in a different order than described, and various steps may be added, omitted, or combined. In addition, features described with reference to certain examples may be combined in other examples.

From the description of the embodiments given above, it will be clear to a person skilled in the art that the method of the embodiments described above can be implemented by means of software plus a necessary general purpose hardware platform, but of course also by means of hardware, the former being in many cases a better embodiment. Based on this understanding, the technical solution of the present application essentially or contributing to the relevant technology can be embodied in the form of a computer software product which is stored in a storage medium (such as a ROM/RAM, a magnetic diskette, an optical disk) and includes a plurality of instructions for causing a terminal (which can be a mobile phone, a computer, a server, or a network device, etc.) to execute the method described in various embodiments of the present application.

Although the embodiments of the present application have been described above with reference to the accompanying drawings, the present application is not limited to the above-mentioned specific embodiments, which are merely illustrative and not restrictive. Those skilled in the art, with the inspiration from the present application, can make many changes without departing from the protection scope of the present application and the appended claims.

## Claims

**1.** A gesture recognition method, comprising:

acquiring an image sequence comprising a human hand, and taking a first image in the image sequence as a target image;
determining at least two lines corresponding to fingers in the target image;
determining valid lines from the at least two lines;
under a condition that a first number of the valid lines is greater than a first number threshold and first angles each between a corresponding one of all of the valid lines and a first coordinate axis of the target image are less than a first angle threshold, determining a subsequent image of the target image as the target image, and returning to the step of determining at least two lines corresponding to the fingers in the target image until the first number is not greater than the first number threshold or one or more of the first angles are not less than the first angle threshold;
determining, according to coordinate values of key points on the valid lines in the first image and a second image, a relative moving distance of the human hand in a direction of the first coordinate axis, wherein the second image is a previous image of the target image;
recognizing, according to the relative moving distance, a gesture corresponding to changing from the first image to the second image.

**2.** The method according to claim 1, wherein determining valid lines from the at least two lines comprises:

calculating, for each first target line of the at least two lines, second angles each between the first target line and another line of the at least two lines other than the first target line;
determining, under a condition that all of the second angles are greater than a second angle threshold, the first target line as an invalid line;
determining lines from the at least two lines other than the invalid line as the valid lines.

**3.** The method according to claim 1, wherein determining, according to the coordinate values of the key points on the valid lines in the first image and the second image, the relative moving distance of the human hand in the direction of the first coordinate axis comprises:

calculating first differences between coordinate components on the first coordinate axis of the coordinate values of the key points on the valid lines in the first image and the second image and a coordinate component of a target key point on the first coordinate axis, wherein the target key point is a wrist key point;
calculating second differences between coordinate components on a second coordinate axis of the coordinate values of the key points on the valid lines in the second image and a coordinate component of the target key point on the second coordinate axis;
determining the relative moving distance according to the first differences and the second differences.

**4.** The method according to claim 3, wherein determining the relative moving distance according to the first differences and the second differences comprises:

calculating, for each first valid line in the first image and the second image, a first average value of the first differences corresponding to the first valid line;
calculating, for each second valid line in the second image, a second average value of the second differences corresponding to the second valid line;
determining the relative moving distance according to the first average value and the second average value.

5. The method according to claim 4, wherein determining the relative moving distance according to the first average value and the second average value comprises:

calculating a third average value of third differences between first average values corresponding to the second image and first average values corresponding to the first image;
calculating a fourth average value of absolute values of fourth differences of second average values of every two adjacent valid lines in the second image;
determining the relative moving distance according to the third average value and the fourth average value.

6. The method according to claim 5, wherein determining the relative moving distance according to the third average value and the fourth average value comprises:
determining a quotient of the third average value and the fourth average value as the relative moving distance.

7. The method according to claim 6, wherein the first coordinate axis is an X axis of the image, and the second coordinate axis is a Y axis of the image;
recognizing, according to the relative moving distance, the gesture corresponding to changing from the first image to the second image comprises:

under a condition that an absolute value of the relative moving distance is greater than a preset distance threshold and the relative moving distance is greater than 0, recognizing the gesture as a right-dial gesture;
under a condition that the absolute value of the relative moving distance is greater than the preset distance threshold and the relative moving distance is less than 0, recognizing the gesture as a left-dial gesture.

8. The method according to claim 6, wherein the first coordinate axis is a Y axis of the image, and the second coordinate axis is an X axis of the image;
recognizing, according to the relative moving distance, the gesture corresponding to changing from the first image to the second image comprises:

under a condition that an absolute value of the relative moving distance is greater than a preset distance threshold and the relative moving distance is greater than 0, recognizing the gesture as a down-dial gesture;
under a condition that the absolute value of the relative moving distance is greater than the preset distance threshold and the relative moving distance is less than 0, recognizing the gesture as an up-dial gesture.

9. A gesture recognition apparatus, comprising:

an acquisition module configured to acquire an image sequence comprising a human hand, and take a first image in the image sequence as a target image;
a first determination module configured to determine at least two lines corresponding to fingers in the target image;
a second determination module configured to determine valid lines from the at least two lines;
a third determination module configured to determine, under a condition that the first number of the valid lines is greater than a first number threshold and first angles each between a corresponding one of all of the valid lines and a first coordinate axis of the target image are less than a first angle threshold, a subsequent image of the target image as the target image, and trigger the first determination module until the first number is not greater than the first number threshold or one or more of the first angles are not less than the first angle threshold;
a fourth determination module configured to determine, according to coordinate values of key points on the valid lines in the first image and a second image, a relative moving distance of the human hand in a direction of the first coordinate axis, wherein the second image is a previous image of the target image;
a recognition module configured to recognize, according to the relative moving distance, a gesture corresponding to changing from the first image to the second image.

10. The apparatus according to claim 9, wherein the second determination module comprises:

a first calculation sub-module configured to calculate, for each first target line of the at least two lines, second angles each between the first target line and another line of the at least two lines other than the first target line;

a first determination sub-module configured to determine, under a condition that all of the second angles are greater than a second angle threshold, the first target line as an invalid line;
a second determination sub-module configured to determine lines from the at least two lines other than the invalid line as the valid lines.

**11.** The apparatus according to claim 9, wherein the fourth determination module comprises:

a second calculation sub-module configured to calculate first differences between coordinate components on the first coordinate axis of the coordinate values of the key points on the valid lines in the first image and the second image and a coordinate component of a target key point on the first coordinate axis, wherein the target key point is a wrist key point;
a third calculation sub-module configured to calculate second differences between coordinate components on a second coordinate axis of the coordinate values of the key points on the valid lines in the second image and a coordinate component of the target key point on the second coordinate axis;
a third determination sub-module configured to determine the relative moving distance according to the first differences and the second differences.

**12.** The apparatus according to claim 10, wherein the third determination sub-module comprises:

a first calculation unit configured to calculate, for each first valid line in the first image and the second image, a first average value of the first differences corresponding to the first valid line;
a second calculation unit configured to calculate, for each second valid line in the second image, a second average value of the second differences corresponding to the second valid line;
a determination unit configured to determine the relative moving distance according to the first average value and the second average value.

**13.** The apparatus according to claim 12, wherein the determination unit comprises:

a first calculation sub-unit configured to calculate a third average value of third differences between first average values corresponding to the second image and first average values corresponding to the first image;
a second calculation sub-unit configured to calculate a fourth average value of absolute values of fourth differences of second average values of every two adjacent valid lines in the second image;
a determination sub-unit configured to determine the relative moving distance according to the third average value and the fourth average value.

**14.** The apparatus according to claim 13, wherein the determination sub-unit is specifically configured to:
determine a quotient of the third average value and the fourth average value as the relative moving distance.

**15.** The apparatus according to claim 14, wherein the first coordinate axis is an X axis of the image, and the second coordinate axis is a Y axis of the image;
the recognition module is specifically configured to:

under a condition that an absolute value of the relative moving distance is greater than a preset distance threshold and the relative moving distance is greater than 0, recognize the gesture as a right-dial gesture;
under a condition that the absolute value of the relative moving distance is greater than the preset distance threshold and the relative moving distance is less than 0, recognize the gesture as a left-dial gesture.

**16.** The apparatus according to claim 14, wherein the first coordinate axis is a Y axis of the image, and the second coordinate axis is an X axis of the image;
the recognition module is specifically configured to:

under a condition that an absolute value of the relative moving distance is greater than a preset distance threshold and the relative moving distance is greater than 0, recognize the gesture as a down-dial gesture;
under a condition that the absolute value of the relative moving distance is greater than the preset distance threshold and the relative moving distance is less than 0, recognize the gesture as an up-dial gesture.

**17.** An electronic device comprising: a processor; a memory; and programs or instructions stored on the memory and executable by the processor, wherein the programs or instructions, when executed by the processor, implement steps of the gesture recognition method according to any of claims 1 to 8.

**18.** A readable storage medium having programs or instructions stored thereon, wherein the programs or instructions, when executed by a processor, implement steps of the gesture recognition method according to any of claims 1 to 8.

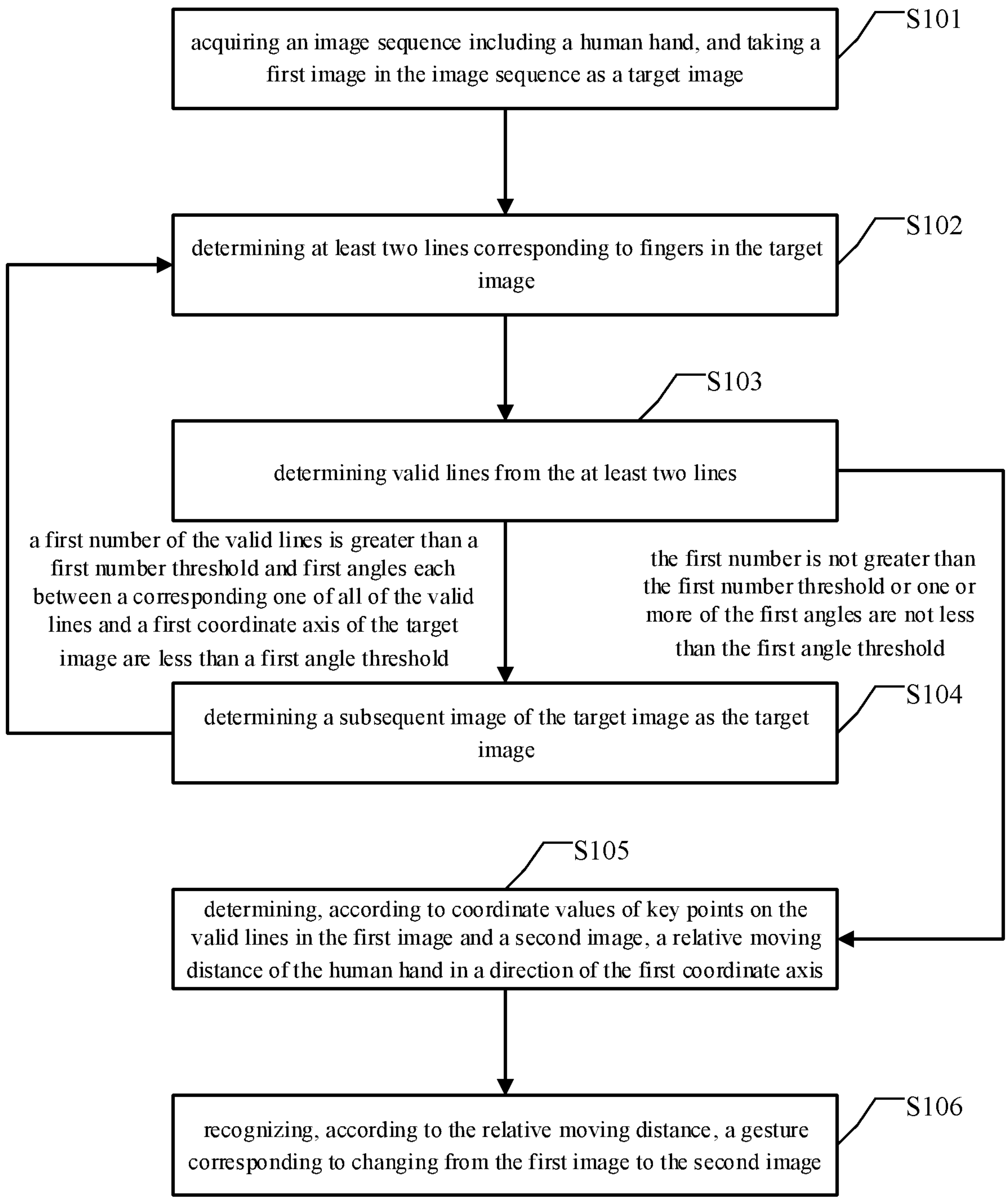
acquiring an image sequence including a human hand, and taking a first image in the image sequence as a target image
S101
determining at least two lines corresponding to fingers in the target image
S102
determining valid lines from the at least two lines
S103
a first number of the valid lines is greater than a first number threshold and first angles each between a corresponding one of all of the valid lines and a first coordinate axis of the target image are less than a first angle threshold
the first number is not greater than the first number threshold or one or more of the first angles are not less than the first angle threshold
determining a subsequent image of the target image as the target image
S104
determining, according to coordinate values of key points on the valid lines in the first image and a second image, a relative moving distance of the human hand in a direction of the first coordinate axis
S105
recognizing, according to the relative moving distance, a gesture corresponding to changing from the first image to the second image
S106

**Fig. 1**

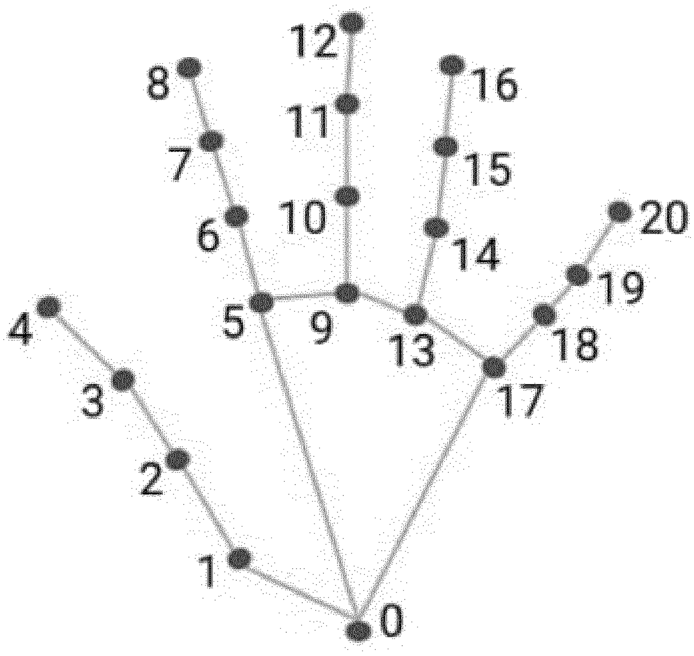


Fig. 2

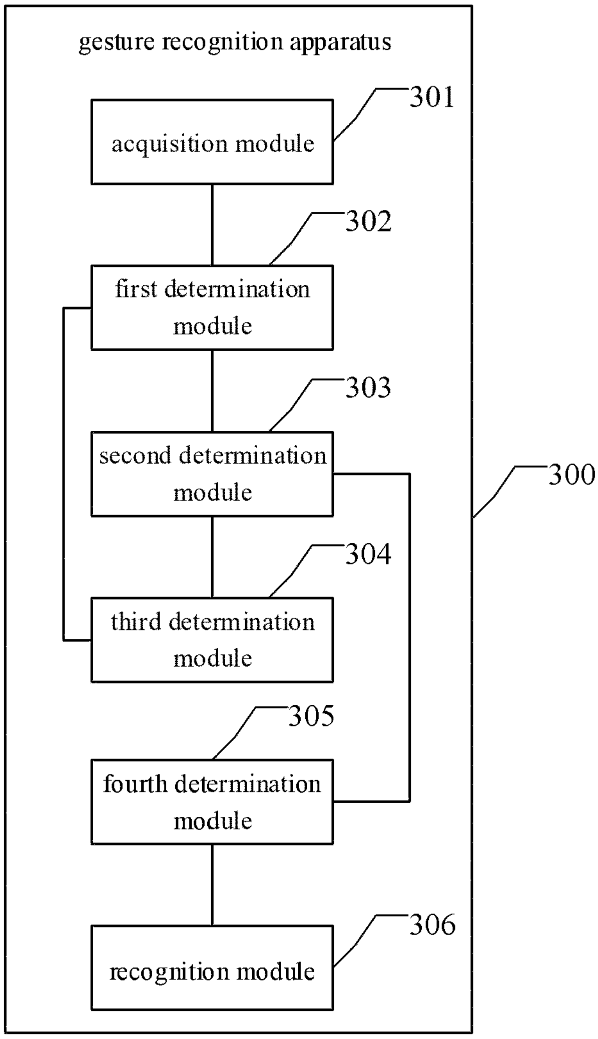
gesture recognition apparatus
301
acquisition module
302
first determination module
303
second determination module
300
304
third determination module
305
fourth determination module
306
recognition module

**Fig. 3**

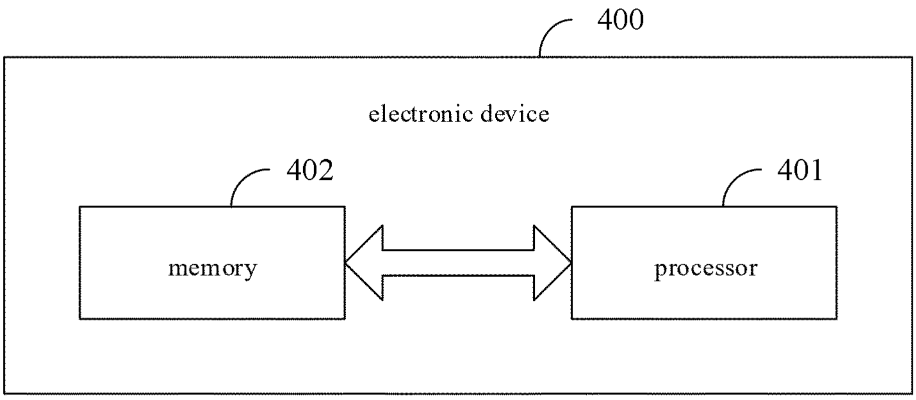
400
electronic device
402
401
memory
processor

**Fig. 4**

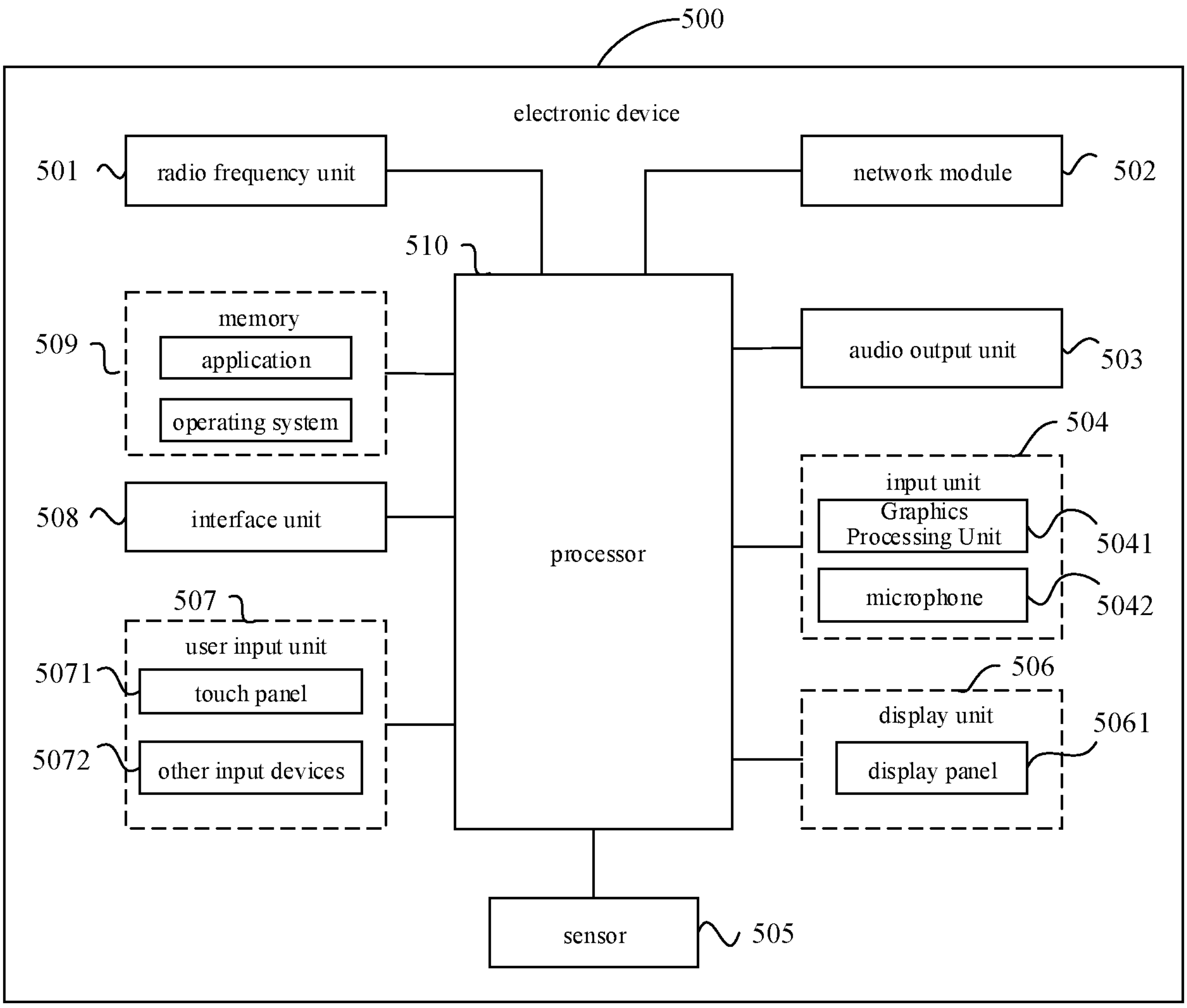
500
electronic device
501
radio frequency unit
network module
502
510
memory
application
operating system
509
audio output unit
503
504
input unit
Graphics Processing Unit
5041
microphone
5042
508
interface unit
processor
507
user input unit
5071
touch panel
5072
other input devices
506
display unit
5061
display panel
sensor
505

Fig. 5

**INTERNATIONAL SEARCH REPORT**

International application No.
**PCT/CN2021/142358**

**A. CLASSIFICATION OF SUBJECT MATTER**

G06F 3/01(2006.01)i

According to International Patent Classification (IPC) or to both national classification and IPC

**B. FIELDS SEARCHED**

Minimum documentation searched (classification system followed by classification symbols)

G06F; G06K

Documentation searched other than minimum documentation to the extent that such documents are included in the fields searched

Electronic data base consulted during the international search (name of data base and, where practicable, search terms used)

EPODOC, WPI, CNKI, CNPAT, IEEE: 坐标, 线条, 连线, 向量, 手指, 指头, 指尖, 手掌, 手腕, 图像, 序列, 数量, 阈值, 范围, 门限, 大于, 小于, 角度, 夹角, 距离, 有效, 目标, 关键, 可用, 手势, 识别, 第二, 均值, 差值, coordinat+, finger, palm, image, number, threshold, angle, distance, gesture, recogni+, line, target, point

**C. DOCUMENTS CONSIDERED TO BE RELEVANT**

| Category* | Citation of document, with indication, where appropriate, of the relevant passages | Relevant to claim No. |
|---|---|---|
| A | CN 109634415 A (HARBIN TOB TECHNOLOGY CO., LTD.) 16 April 2019 (2019-04-16) description, paragraphs [0022]-[0058] | 1-18 |
| A | JP 2017102598 A (FUJITSU LIMITED) 08 June 2017 (2017-06-08) entire document | 1-18 |
| A | CN 110163045 A (TENCENT TECHNOLOGY SHENZHEN CO., LTD.) 23 August 2019 (2019-08-23) entire document | 1-18 |
| A | CN 112699849 A (VIVO COMMUNICATION TECHNOLOGY CO., LTD.) 23 April 2021 (2021-04-23) entire document | 1-18 |
| A | CN 108664877 A (BEIJING INSTITUTE OF TECHNOLOGY) 16 October 2018 (2018-10-16) entire document | 1-18 |
| A | US 2016132124 A1 (MITSUBISHI ELECTRIC CORP.) 12 May 2016 (2016-05-12) entire document | 1-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 May 2022** | **28 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/142358**

| Patent document cited in search report | | | Publication date (day/month/year) | Patent family member(s) | | | Publication date (day/month/year) |
|---|---|---|---|---|---|---|---|
| CN | 109634415 | A | 16 April 2019 | None | | | |
| JP | 2017102598 | A | 08 June 2017 | None | | | |
| CN | 110163045 | A | 23 August 2019 | US | 2020393911 | A1 | 17 December 2020 |
| | | | | EP | 3805982 | A1 | 14 April 2021 |
| | | | | WO | 2019233216 | A1 | 12 December 2019 |
| CN | 112699849 | A | 23 April 2021 | None | | | |
| CN | 108664877 | A | 16 October 2018 | None | | | |
| US | 2016132124 | A1 | 12 May 2016 | CN | 105393281 | A | 09 March 2016 |
| | | | | JP | WO2015015843 | A1 | 02 March 2017 |
| | | | | DE | 112014003563 | T5 | 21 April 2016 |
| | | | | WO | 2015015843 | A1 | 05 February 2015 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202111247920X